# EUROPEAN PATENT SPECIFICATION

(11) **EP 2 006 173 B1**
(45) Date of publication and mention of the grant of the patent: **29.09.2010**
(21) Application number: 07110909.4
(22) Date of filing: 22.06.2007
(51) Int. Cl.: B60S 1/38

(54) **Windscreen wiper device**
Scheibenwischvorrichtung
Dispositif d'essuie-glace

(43) Date of publication of application: 24.12.2008
(73) Proprietor: Federal-Mogul S.A., 6790 Aubange (BE)
(72) Inventor: Avsar, Erdal, 54400, Longwy (FR)
(74) Representative: Hooiveld, Arjen Jan Winfried

(56) References cited:
- DE-A1- 10 014 753
- DE-A1-102004 058 532
- DE-A1-102005 037 269

## Description

The present invention relates to a windscreen wiper device comprising an elastic, elongated carrier element, as well as an elongated wiper blade of a flexible material, which wiper blade comprises a wiping element for wiping a windscreen, which wiper blade includes opposing longitudinal grooves on its longitudinal sides, in which grooves spaced-apart longitudinal strips of the carrier element are disposed, wherein neighbouring ends of the longitudinal strips are interconnected by a respective connecting piece, which windscreen wiper device comprises a spoiler and a connecting device for an oscillating arm, wherein the oscillating arm is pivotally connected to the connecting device about a pivot axis near one end, wherein the windscreen wiper device is further provided with an elongated protective element detachably connected to the wiper blade and covering the wiping element thereof, wherein the protective element includes a wiping element integral therewith for wiping the windscreen, wherein the windscreen wiper device comprises separate retention means designed as a dip detachably connected to said protective element for retaining said protective element on said wiper blade.

Document DE 10 2005 037269 A1 discloses a windscreen wiper device according to the preamble of claim 1.

Such a windscreen wiper device is generally known. This prior art windscreen wiper device is designed as a "yokeless" wiper device, wherein no use is made of several yokes pivotally connected to each other, but wherein the wiper blade is biassed by the carrier element, as a result of which it exhibits a specific curvature. The protective element of this prior art windscreen wiper device serves to protect the wiping element of the wiper blade until delivery of a new car to a purchaser. Moreover, with the aid of the wiping element of this known protective element the windscreen of such a new car can be wiped in the case of manoeuvring drives which are necessary up to delivery.

In practice it has become apparent that, during use of the known protective element, especially when the windscreen to be wiped is in relatively dry condition, high forces ara exerted on the connection between the protective element and the wiper blade. As a consequence thereof, the protective element may get loose from the wiper blade, with all negative consequences involved.

The object of the invention is to provide a windscreen wiper device, wherein the protective element and the wiper blade are interconnected in an improved, safe and reliable manner, without negatively affecting the wiping properties of the protective element.

Thereto, a windscreen wiper device of the type referred to in the introduction is characterized according to the invention in that an upper part of said retention means extends over said spoiler on a side of said wiper blade that faces away from the wiping element of said wiper blade, said upper part having a shape corresponding to said spoiler, and wherein said retention means engage said protective element from the outside in a lateral region thereof, so that said retention means can be mounted onto said protective element. In other words, said

retention means form a separate (that is single) constructional element engaging said protective element laterally from the outside. Said engagement from the outside makes release impossible during use. Particularly, said retention means engage around said protective element at a location of the interconnection of said protective element and said wiper blade. Experiments have shown that, during use, said protective element may not unintentionally get loose from said wiper blade, while the wiping quality thereof is still at the highest level and a safe protection of the wiping element of the wiper blade is assured until delivery of a new car to a purchaser.

In one preferred embodiment of a windscreen wiper device in accordance with the invention said retention means comprise at least one L-shaped engaging member for engaging said protective element. Particulary, said retention means are provided with two L-shaped engaging members on opposite sides of said protective element, wherein said engaging members are made in one piece with said retention means.

In another preferred embodiment of a windscreen wiper device according to the invention said retention means are snapped onto said protective element. In that case, in order to connect the retention means onto the protective element, said L-shaped engaging members are initially pulled outwards against an elastic force and then allowed to spring back inwards, thus snapping, that is clipping the resilient L-shaped engaging menbers and thus the retention means as a whole onto the protective element. By subsequently pulling out again said L-shaped engaging members against the elastic force, the retention means may be released from the protective element. In the alternative, said retention means are slid onto said protective element.

In another preferred ebodiment of a windscreen wiper device in accordance with the invention said retention means are made of an elastic material, such as an elastomer material, rubber for example. Preferably, said retention means are a co-extruded profile.

In another preferred embodiment of a windscreen wiper device according to the invention said retention means comprises two sub retention means on opposite sides of said connecting device. In particular, each sub retention means extend from said connecting device to said respective connecting piece. Of course, said sub retention means may also extend over a part of the distance between said connecting device to said respective connecting piece.

The invention will now be explained in more detail with reference to figures illustrated in a drawing, wherein
- Figure 1 shows a perspective, schematic view of a windscreen wiper device according to the invention; and
- Figure 2 is a perspective, schematic cross-section of a protective element to be used in a windscreen wiper device of figure 1; and
- Figure 3 shows a perspective, schematic cross-section of single retention means to be used in a protective element of figure 2, albeit with a different wiping element.

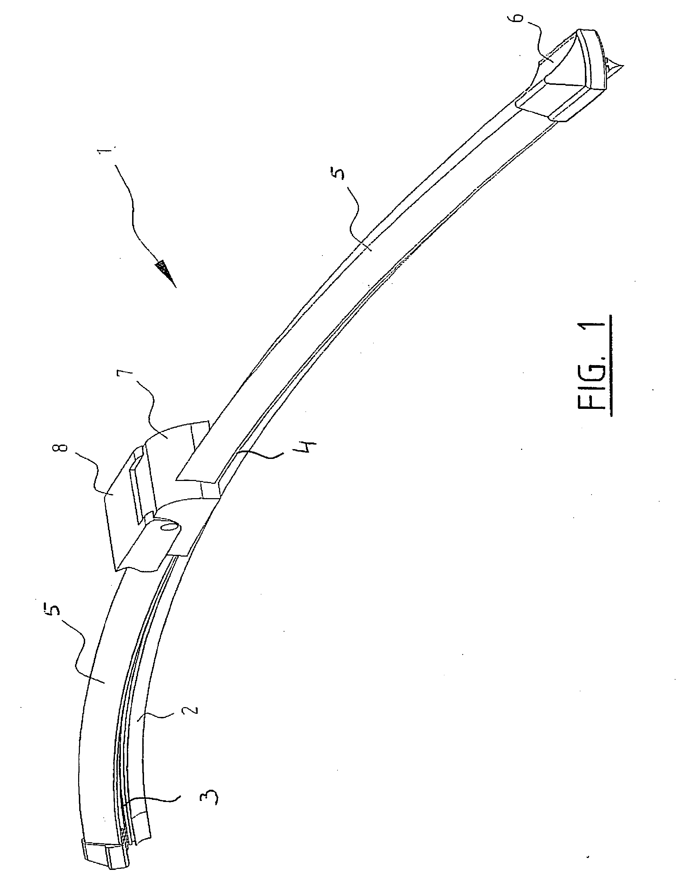

Figure 1 shows a windscreen wiper device 1 of the "yokeless" type according to the invention. Said windscreen wiper device is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the rubber wiper blade 2, as it were, which is thus biassed in a curved position (the curvature in operative position being that of a windscreen to be wiped). Neighbouring ends of strips 4 are interconnected on either side of the windscreen wiper device 1 by means of connecting pieces 6 functioning as clamping members. In this embodiment, the connecting pieces 6 are separate constructional elements, which may be form-locked ("positive locking" or "having positive fit") as well as force-locked to the ends of strips 4. In another preferred variant, said connecting pieces 6 are in one piece with the strips 4 made of spring band steel. In the latter case said connecting pieces form transverse bridges for the strips 4, as it were. A spoiler 5 is furthermore provided.

The windscreen wiper device 1 is furthermore built up of a connecting device 7 of plastic material for an oscillating wiper arm 8. The oscillating wiper arm 8 is pivotally connected to the connecting device 7 about a pivot axis near one end.

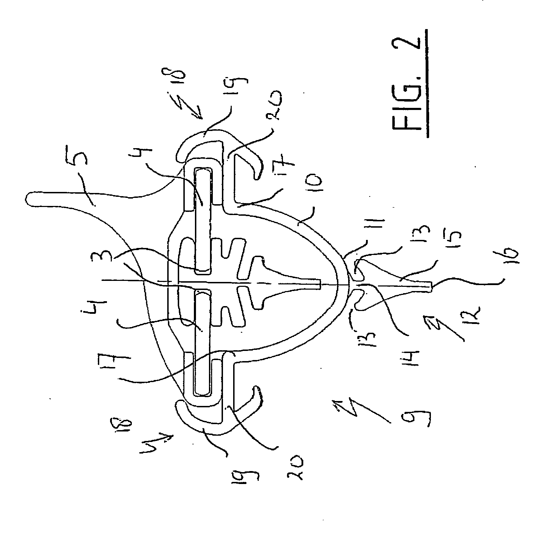

As can be seen in figure 2, a soft rubber protective element 9 is detachably connected in its entirety to said wiper blade 2. The protective element 9 consists of an elongated protective part 10 with a U-shaped cross-section, while the base 11 of said U-shaped cross-section is provided with a downwardly extending wiping part or wiping element 12. Said wiping element 12 consists of two tilting web grooves 13 defining a strip-like tilting web 14 between them, as well as a downwardly extending wiping lip 15 on the tilting web 14. Said wiping lip 15 rests with its free end 16 on a windscreen to be wiped. In action said wiping lip 15 tilts in its oscillation reversal positions. The legs 17 of said U-shaped cross-section each comprise in one piece therewith an elastic L-shaped engaging member 18 for snappingly engaging said wiper blade 2 between the legs 19,20 of said elastic L-shaped engaging member 18. The protective element 9 is an integral co-extruded piece.

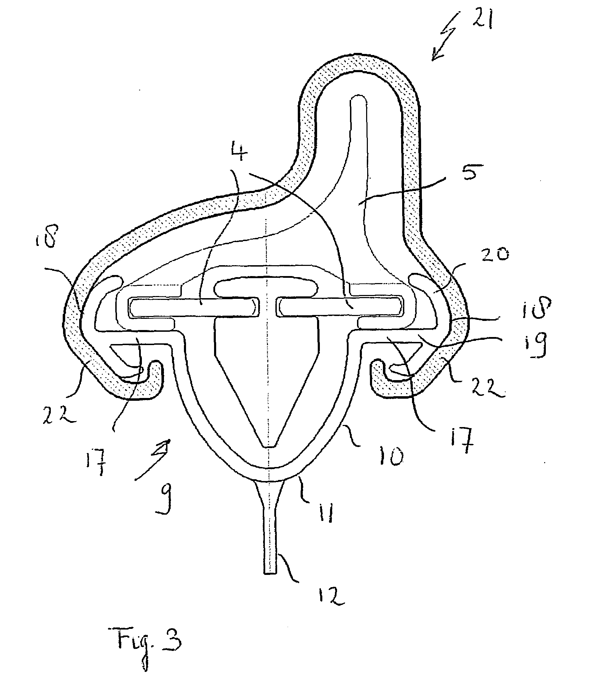

In figure 3 retention means 21 as a single, integral, co-extruded piece detachably connected to said protective element 9 are shown for retaining said protective element 9 onto said wiper blade 2. As can be seen from figure 3, said retention means 21 extend over a side of said wiper blade 2 that faces away from the wiping element of said wiper blade 2, i.e. over said spoiler 5, and engage said protective element 9 in a lateral area thereof. More in particular, said retention means 21 are provided with two L-shaped engaging members 22 on opposite sides of the protective element 9, to engage around said protective element 9 at a location 23 of the interconnection of said protective element 9 and said wiper blade 2. In this particular case said retention means 21 are snapped onto said protective element 9, that is said L-shaped engaging members 22 are initially pulled outwards against an elastic force and then allowed to spring back inwards, thus snapping, that is clipping the resilient L-shaped engaging menbers 22 and thus the retention means 21 as a whole onto the protective element 9. By subsequently pulling out again said L-shaped engaging members 22 against the elastic force, the retention means 21 may be released from the protective element 9. As can be seen from figure 3, said retention means 21 - or at least an upper part thereof extending over a side of said wiper blade 2 that faces away from the wiping element of said wiper blade 2 - have/has a shape corresponding to said spoiler 5, so that, during use, said retention means 21 act as a spoiler/air deflector.

Said retention means 21 may comprise two sub retention means on opposite sides of said connecting device 7, each extending between said connecting device 7 and said respective connecting piece 6. In the alternative, said retention means 21 are present at only one side of said connecting device 7. As indicated earlier, the wiping element 12 of said protective element 9 as shown in figure 3 is a simple strip contrary to the dedicated form of the wiping element thereof in figure 2.

The invention is not restricted to the variants shown in the drawing, but it also extends to other embodiments that fall within the scope of the appended claims.

## Claims

1. A windscreen wiper device (1) comprising an elastic, elongated carrier element, as well as an elongated wiper blade (2) of a flexible material, which wiper blade (2) comprises a wiping element for wiping a windscreen, which wiper blade (2) includes opposing longitudinal grooves (3) on its longitudinal sides, in which grooves (3) spaced-apart longitudinal strips (4) of the carrier element are disposed, wherein neighbouring ends of the longitudinal strips (4) are interconnected by a respective connecting piece (6), which windscreen wiper device (1) comprises a spoiler (5) and a connecting device (7) for an oscillating arm (8), wherein the oscillating arm (8) is pivotally connected to the connecting device (7) about a pivot axis near one end, wherein the windscreen wiper device (1) is further provided with an elongated protective element (9) detachably connected to the wiper blade (2) and covering the wiping element thereof, wherein the protective element (9) includes a wiping element (12) integral therewith for wiping the windscreen, wherein the windscreen wiper device (1) comprises separate retention means (21) designed as a clip detachably connected to said protective element (9) for retaining said protective element (9) on said wiper blade (2), **characterized in that** an upper part of said retention means (21) extends over said spoiler (5) on a side of said wiper blade (2) that faces away from the wiping element of said wiper blade (2), said upper part having a shape corresponding to said spoiler (5), and wherein said retention means (21) engage said protective element (9) from the outside in a lateral region thereof, so that said retention means (21) can be mounted onto said protective element (9).

2. A windscreen wiper device (1) according to claim 1, wherein said retention means (21) engage around said protective element (9) from the outside at a location of the interconnection of said protective element (9) and said wiper blade (2).

3. A windscreen wiper device (1) according to claim 1 or 2, wherein said retention means (21) comprise at least one L-shaped engaging member (22) for engaging said protective element (9).

4. A windscreen wiper device (1) according to claim 1, 2 or 3, wherein said retention means (21) are snapped onto said protective element (9).

5. A windscreen wiper device (1) according to claim 1, 2 or 3, wherein said retention means (21) are slid onto said protective element (9).

6. A windscreen wiper device (1) according to any of the preceding claims 1 through 5, wherein said retention means (21) are made of an elastic material.

7. A windscreen wiper device (1) according to any of the preceding claims 1 through 6, wherein said retention means (21) are a co-extruded profile.

8. A windscreen wiper device (1) according to any of the preceding claims 1 through 7, wherein said retention means (21) comprises two sub retention means on opposite sides of said connecting device (7).

9. A windscreen wiper device (1) according to claim 8, wherein each sub retention means extend from said connecting device (7) to said respective connecting piece (6).

## Patentansprüche

1. Scheibenwischervorrichtung (1), enthaltend ein elastisches, längliches Trägerelement, wie auch ein längliches Wischerblatt (2) eines flexiblen Materials, wobei das Wischerblatt (2) ein Wischelement zum Wischen einer Windschutzscheibe enthält, das Wischerblatt (2) gegenüberliegende längliche Rillen (3) auf seinen Längsseiten aufweist, in diesen Rillen (3) beabstandete, längliche Streifen (4) des Trägerelementes angeordnet sind, benachbarte Enden der länglichen Streifen (4) durch ein entsprechendes Verbindungsstück (6) verbunden sind, die Scheibenwischervorrichtung (1) einen Luftabweiser (5) und eine Verbindungsvorrichtung (7) für einen Schwingarm (8) enthält, der Schwingarm (8) schwenkbar mit der Verbindungsvorrichtung (7) um eine Schwenkachse in der Nähe eines Endes verbunden ist, die Scheibenwischervorrichtung (1) weiterhin mit einem länglichen Schutzelement (9) versehen ist, das mit dem Wischerblatt (2) lösbar verbunden ist und dessen Wischelement bedeckt, das Schutzelement (9) ein Wischelement (12) enthält, das integraler Bestandteil desselben ist und die Windschutzscheibe wischt, und die Scheibenwischervorrichtung (1) separate Halteeinrichtungen (21) enthält, die als Spange ausgebildet und lösbar mit dem Schutzelement (9) verbunden sind, um das Schutzelement (9) an dem Wischerblatt (2) zu halten, **dadurch gekennzeichnet, dass** sich ein oberer Teil der Halteeinrichtungen (21) über den Luftabweiser (5) auf einer Seite des Wischerblattes (2) erstreckt, die dem Wischelement des Wischerblattes (2) abgewandt ist, wobei dieser obere Teil eine Form hat, die mit dem Luftabweiser (5) korrespondiert, und die Halteeinrichtungen (21) in das Schutzelement (9) von außen in einem seitlichen Bereich desselben derart eingreifen, dass die Halteeinrichtungen (21) an dem Schutzelement (9) angebracht werden können.

2. Scheibenwischervorrichtung (1) nach Anspruch 1, bei der die Halteeinrichtungen (21) um das Schutzelement (9) von außen an einer Verbindungsstelle von Schutzelement (9) und Wischerblatt (2) greifen.

3. Scheibenwischervorrichtung (1) nach Anspruch 1 oder 2, bei der die Halteeinrichtungen (21) wenigstens ein L-förmiges Eingriffselement (22) aufweisen, das in das Schutzelement (9) eingreift.

4. Scheibenwischervorrichtung (1) nach Anspruch 1, 2 oder 3, bei der die Halteeinrichtungen (21) auf das Schutzelement (9) gerastet sind.

5. Scheibenwischervorrichtung (1) nach Anspruch 1, 2 oder 3, bei der die Halteeinrichtungen (21) auf das Schutzelement (9) aufgeschoben sind.

6. Scheibenwischervorrichtung (1) nach einem der vorhergehenden Ansprüche 1 bis 5, bei der die Halteeinrichtungen (21) aus einem elastischen Material gefertigt sind.

7. Scheibenwischervorrichtung (1) nach einem der vorhergehenden Ansprüche 1 bis 6, bei der die Halteeinrichtungen (21) ein koextrudiertes Profil sind.

8. Scheibenwischervorrichtung (1) nach einem der vorhergehenden Ansprüche 1 bis 7, bei der die Halteeinrichtungen (21) zwei Teilhalteeinrichtungen auf gegenüberliegenden Seiten der Verbindungsvorrichtung (7) enthalten.

9. Scheibenwischervorrichtung (1) nach Anspruch 8, bei der sich jede Teilhalteeinrichtung von der Verbindungsvorrichtung (7) zu dem jeweiligen Verbindungsstück (6) erstreckt.

## Revendications

1. Dispositif d'essuie-glace (1) comprenant un élément de support élastique allongé, ainsi qu'un balai d'essuie-glace allongé (2) d'un matériau flexible, lequel balai d'essuie-glace (2) comprend un élément d'essuyage pour essuyer un pare-brise, lequel balai d'essuie-glace (2) comprend des rainures longitudinales opposées (3) sur ses cotés longitudinaux, dans lesquelles rainures (3) sont disposées des bandes longitudinales espacées (4) de l'élément de support, où des extrémités voisines des bandes longitudinales (4) sont reliées entre elles par une pièce de raccord respective (6), lequel dispositif d'essuie-glace (1) comprend un déflecteur (5) et un dispositif de raccord (7) pour un bras oscillant (8), où le bras oscillant (8) est relié à pivotement au dispositif de raccord (7) autour d'un axe de pivot proche d'une extrémité, où le dispositif d'essuie-glace (1) est en outre muni d'un élément de protection allongé (9) relié de manière détachable au balai d'essuie-glace (2) et recouvrant l'élément d'essuyage de celui-ci, où l'élément de protection (9) comprend un élément d'essuyage (12) d'un seul tenant avec celui-ci destiné à essuyer le pare-brise, où le dispositif d'essuie-glace (1) comprend des moyens de retenue séparés (21) conçus sous forme d'une attache reliée de manière détachable audit élément de protection (9) afin de retenir ledit élément de protection (9) sur ledit balai d'essuie-glace (2), **caractérisé en ce qu'**une partie supérieure desdits moyens de retenue (21) s'étend sur ledit déflecteur (5) sur un côté dudit balai d'essuie-glace (2) qui fait face à l'opposé de l'élément d'essuyage dudit balai d'essuie-glace (2), ladite partie supérieure ayant une forme correspondant audit déflecteur (5), et où lesdits moyens de retenue (21) mettent en prise ledit élément de protection (9) à partir de l'extérieur dans une région latérale de celui-ci, de sorte que lesdits moyens de retenue (21) puissent être montés sur ledit élément de protection (9).

2. Dispositif d'essuie-glace (1) selon la revendication 1, où lesdits moyens de retenue (21) se mettent en prise autour dudit élément de protection (9) à partir de l'extérieur au niveau d'un emplacement de l'interconnexion dudit élément de protection (9) et dudit balai d'essuie-glace (2).

3. Dispositif d'essuie-glace (1) selon la revendication 1 ou 2, où lesdits moyens de retenue (21) comprennent au moins un élément de mise en prise en forme de L (22) pour mettre en prise ledit élément de protection (9).

4. Dispositif d'essuie-glace (1) selon les revendications 1, 2 ou 3, où lesdits moyens de retenue (21) sont emboîtés par pression sur ledit moyen de protection (9).

5. Dispositif d'essuie-glace (1) selon les revendications 1, 2 ou 3, où lesdits moyens de retenue (21) sont glissés sur ledit élément de protection (9).

6. Dispositif d'essuie-glace (1) selon l'une quelconque des revendications 1 à 5 précédentes, où lesdits moyens de retenue (21) sont faits d'un matériau élastique.

7. Dispositif d'essuie-glace (1) selon l'une quelconque des revendications 1 à 6 précédentes, où lesdits moyens de retenue (21) sont un profilé co-extrudé.

8. Dispositif d'essuie-glace (1) selon l'une quelconque des revendications 1 à 7 précédentes, où lesdits moyens de retenue (21) comprennent de moyens de retenue auxiliaires sur des cotés opposés dudit dispositif de raccord (7).

9. Dispositif d'essuie-glace (1) selon la revendication 8, où chaque moyen de retenue auxiliaire s'étend à partir dudit dispositif de raccord (7) jusqu'à ladite pièce de raccord respective (6).
